Europäisches Patentamt

(19) European Patent Office

Office européen des brevets

(11) Publication number: **0 121 508**
**A2**

(12) # EUROPEAN PATENT APPLICATION

(21) Application number: **84850098.9**

(22) Date of filing: **27.03.84**

(51) Int. Cl.³: **H 04 M 1/00**
**H 04 M 11/00**

(30) Priority: **31.03.83 SE 8301839**

(43) Date of publication of application:
**10.10.84 Bulletin 84/41**

(84) Designated Contracting States:
**DE FR GB IT NL SE**

(71) Applicant: **Persson, Claes Lorentz Uno**
**P.O. Box 21154**
**S-100 31 Stockholm 21(SE)**

(72) Inventor: **Persson, Claes Lorentz Uno**
**P.O. Box 21154**
**S-100 31 Stockholm 21(SE)**

(74) Representative: **Norén, Per Bo Arne**
**SWEDPATENT AB P.O. Box 21021**
**S-100 31 Stockholm 21(SE)**

(54) A method to influence an audio source during telephone operation, and a device for utilization of the method.

(57) A method to influence an audio source during telephone calls, and a device for utilization of the method, whereby the sound volume of the audio source is being reduced in connection with incoming telephone signals, as well as during the period of time that the receiver of a telephone (B) is being lifted. According to the invention, a signal status indicating unit (A) is connected to the wiring circuit of a telephone (B), said unit being arranged to indicate both incoming telephone signals as well as lifted telephone receiver. The signal status indicating unit (A) is preferably arranged to maintain the output signal also during the time interval existing between two successive telephone signals. Said output signal is transmitted, wireless or by wire, to connect a shunting resister (G) in the loudspeaker circuit for which a reduced sound volume is intended, and by loudspeaker is also included the audio circuit existing in the audio source, in which the shunting resistor (G) can be included as an integrated member. When an output signal from the signal status indicating unit (A) no longer exists, the shunting resistor (G) is disconnected from the audio or loudspeaker circuit, thereby restoring the original sound volume.

EP 0 121 508 A2

Croydon Printing Company Ltd.

- 1 -

A method to influence an audio source during telephone operation, and
a device for utilization of the method

The present invention relates to a method to influence an audio source
during telephone operation, and a device for utilization of the method.

When operating a telephone installation located adjacent to an electronic audio source, e.g. radio, TV, grammophone or a tape recorder
unit, it is obviously desirable to achieve a reduction of the audio
output from such an installation when the telephone is being used. A
previously known device for this purpose is disclosed in U.S. patent
number 2 792 450, relating to a weight indicating unit, on which a
telephone is intended to be placed. Said weight indicating unit includes
an electrical switching means, arranged to be operated when the telephone
receiver is lifted, i.e. when the weight of the telephone is reduced,
which is indicated by the weight indicating unit supporting the telephone. By means of two wires, electrically connected to said switching
means, a shunting resistor is connected to the loudspeaker circuit which
is related to the audio source, whereby the sound volume is reduced.

The above described previously known device can thus only be used for
telephones where a change of weight can be indicated when the telephone
receiver is being lifted and thus for example not suitable for wall
mounted telephones. Furthermore, the audio source is not influenced
until the telephone receiver is lifted, and if the audio source has been
set for a sound volume resulting in a rather high output level, it is
often extremely difficult to notice the phone signals of an incomming
telephone call. The previously known device is also from aethical point
of view unsuitable, since the weight indicating unit placed under the telephone results in an additional element of undesirable nature. A design which includes a weight indicating unit, and an electrical switching means influenced thereof involves also large risks for problems and faults in use. Furthermore, a wiring operation is also necessary for the previously known device between the weight indicating unit and the amplifier circuit to be influenced, which causes further complications during installation of the device.

The object of the present invention is to disclose a method, and a device for utilization of the method, which completely removes the disadvantages involved with the above discussed previously known device. It is thus possible to use for all types of telephone installations, also wall mounted, and furthermore, the sound level of the audio source is also influenced in connection with incoming telephone signals. Furthermore, no aesthetically undesirable unit is required adjacent to the telephone, and it is also possible to completely avoid a wiring operation to the amplifier circuit concerned. It is also extremely simple to influence a number of independent audio sources simultaneously, e.g. a radio, a TV and a record player unit.

The method according to the present invention is mainly characterized in that in the wiring circuit to the telephone to be placed under surveillance is checked for indication of telephone signals/lifted telephone receiver, and that such an indication is transmitted as a signal, wireless or by wire, to a receiver unit, arranged to connect a shunting resistor in the loudspeaker circuit intended to be reduced with regard to sound volume, said shunting resistor being disconnected when signal indication no longer exists.

The device according to the present invention is mainly characterized in the characteristic features disclosed in the following subclaims, related to a device for utilization of the method.

A basic example of an embodiment for utilization of the method according to the present invention is more fully described below with reference to the enclosed circuit diagram, and also certain modifications relating to such a device will be discussed.

According to the invention, a signal status indicating unit A is connected to the wiring circuit of the telephone B, arranged to indicate both incoming phone signals as well as whether or not the phone receiver has been lifted.

Such a signal status indicating unit A may comprise of a rectifying circuit, connected to one of the wires by means of which the telephone B is connected to the telephone circuit. In the case where no phone signals exist, and the telephone receiver has not been lifted, the electric circuit to the telephone circuit is interrupted, i.e. no resulting voltage is obtained over the rectifying circuit, and a no signal status indication is thus achieved.

However, if incoming phone signals should occur, a voltage potential over the rectifying circuit is obtained during the period of time while the phone signals are maintained, and this resulting voltage potential can be used to influence an amplifier circuit C, i.e. two transistors connected in a darlington configuration. In order to maintain signal indication also during the interval between two succesive phone signals, a capacitor can be included in the circuit, which is charged in connection with each phone signal. This will result in a continous output signal during the period while phone signals occur, as well as during intermediate periods of time.

When the phone receiver is lifted, in intention to respond to an incoming phone call or to make an outgoing phone call, a voltage circuit is closed via the telephone B to the telephone circuit and this voltage can also be used over the rectifying circuit to influence the amplifier circuit C which will be maintained influenced during the period of time as the phone receiver is being lifted.

The above description should make it clear, that the signal status indicating unit A causes the amplifier circuit C to be influenced both during the complete period of time while incoming phone signals occur, as well as during the complete period of time as the receiver of the telephone B is being lifted, i.e. during the period while the sound volume of an adjacent audio source should be reduced.

The output signal from the amplifier circuit C is in the circuit diagram shown transferred to a signal transmitter D, preferably comprising of a radio transmitter having low output power. The signal transmitter D can obviously also be any other type of transmitter, e.g. for transmission of signals within the unhearable audio spectrum, such as within the ultra sound range.

The transmitted signal is received by a signal receiver E, arranged to receive a signal transmitted from a signal transmitter D, and the received signal is used to influence for example a relay F which connects a shunting resistor G in the amplifier circuit, which sound volume is intended to be reduced. It is also possible to arrange such a shunting resistor G as an integrated part of the audio source, and in the audio circuit of the unit, and to arrange said unit with connecting means facilitating a direct connection of the signal receiver E or the relay F. If such a possibility is used during the manufacture of the audio source also the relay F can form an integrated part of said audio source and necessary voltage supply for the signal receiver E can be arranged by the attachment or plug-in point of same, whereby voltage supply by means of batteries or similar would not be required.

According to the above, a wireless signal transmitted from the signal status indicating unit A has been discussed, which obviously from many points of view is advantageous, partly due to the fact that no wiring is required between the units concerned, partly due to the fact that it would be extremely simple to influence a number of independent audio sources simultaneously.

Such a wireless signal transmission can also be accomplished with high security against influence of outside disturbances, e.g. by performing the signal transmission as a sequency of tones, a train of pulses with predetermined intervals, or as information coded in any other way. Signal transmission can obviously also occur as two successive and independent steps, a first code sequence indicating that the signal status indicating unit A has been influenced, and a second code sequence indicating that the influence has stopped.

Apart from wireless signal transmission it is also obviously within the scope of the invention to transmit the signals by wire, in which case certain previously discussed units can be excluded. Accordingly, the amplifier circuit C can be arranged to influence a relay F, which relay F by means of a pair of wires can connect the shunting resistor G in the amplifier circuit concerned or influence such a shunting resistor G arranged as an integrated part of the audio circuit in the audio unit concerned. By means of further pairs of wires, the relay F can obviously also simultaneously influence a number of loudspeaker circuits, related to of each other independant audio sources. The signal status indicating unit A can advantageously be combined with, or be connected to the wall connection of the telephone B for the subscriber telephone network. For plug-in connected telephones, such a connection is advantageously accomplished by using an intermediate member between existing wall connection and the plug-in connection of the telephone B. Such an intermediate member can either be arranged to include certain of previously discussed units, or only serve as a connection for said units, in which case same can be located surrounded by a separate housing.

Furthermore, optical indication can also easily be accomplished to show that action has been taken in order to reduce the volume of audio sources connected to the system, and such an indication may comprise of a light emitting diode or similar, connected over the outgoing wires from the signal status indicating rectifying circuit. Such an indication facilitates a simple and visual control of the function for the installation.

The above described embodiment, as well as discussed modifications, are only intended to serve as an example of an embodiment within the scope of the inventive thought as disclosed in the following claims, in view of the fact that further modifications obviously are possible. Accordingly, the method in which signal indication is performed can be further modified in a number of ways, while maintaining the possibility to indicate incoming phone signals, maintaining the output signals in existing intervals between each phone signal, as well as with regard to indication of whether or not the phone receiver has been lifted from the telephone B. Since the electrical circuits for such indication obviously can be varied in a number of ways, the described solution is only one of a number of possible alternatives, obvious to a person skilled in the art.

The present invention is thus not in any way restricted to the shown embodiment and the above indicated modification, but can be further varied within the scope of the inventive thought and the following claims.

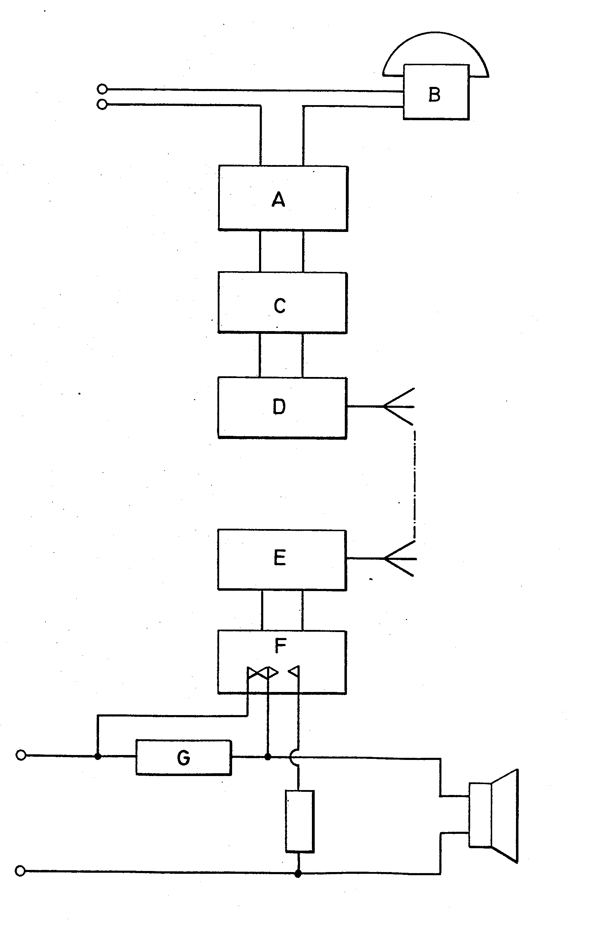

Claims:

1.    A method to influence an audio source during telephone calls, characterised in that the wiring circuit to the telephone to be placed under surveillance is checked for indication of telephone signals/lifted telephone receiver, and that such an indication is transmitted as a signal, wireless or by wire, to a receiver unit, arranged to connect a shunting resistor in the loudspeaker circuit intended to be reduced with regard to sound volume, said shunting resistor being disconnected when signal indication no longer exists.

2.    A method according to claim 1, characterised in that the signal transmitted to the receiver unit is maintained as a substantially continuous signal during the period of time as surveillance results in signal indication.

3.    A method according to claim 1, characterised in that the signal transmitted to the receiver unit comprises of two independent signals having different signal characteristics from each other, a first signal being transmitted when surveillance results in signal indication, and a second signal, having different signal characteristics in relation to the first signal, being transmitted when signal indication no longer exists.

4.    A device for utilization of the method according to any of claims 1 - 3, characterised in that it includes a signal status indicating unit (A) connected to the wiring circuit of a telephone (B) intended to be placed under surveillance, arranged to maintain surveillance of telephone signals/lifted telephone receiver, and that indicated signal status is transmitted, wireless or by wire, to connect a shunting resistor (G) in the loudspeaker circuit intended to be reduced with regard to sound volume, and that said shunting resistor (G) is maintained connected during the period of time as the signal status indicating unit (A) indicates telephone signal and/or lifted telephone receiver.

5.    Device according to claim 4, characterised in that the signal status indicating unit (A), preferably by means of an amplifier circuit (C), is arranged to influence a signal transmitter (D) for transmission within the radio or audio frequency range, and that the transmitted signal is arranged to be received by a signal receiver (E), which by means of a relay (F) or similar causes connection of a shunting resistor in the loudspeaker circuit intended to be reduced with regard to sound volume.

6. Device according to claim 4, characterised in that the signal status indicating unit (A), preferably by means of an amplifier circuit (C), is galvanically connected by means of a relay (F) or similar to a shunting resistor (G) in the loudspeaker circuit intended to be reduced with regard to sound volume, and that said shunting resistor (G) is connected/disconnected by means of signals transferred from the signal status indicating unit (A).

7. Device according to any of claims 4 - 6, characterised in that the signal status indicating unit (A) includes a time delay circuit, arranged to be initiated by incoming telephone signals, and to maintain the output signal from the signal status indicating unit (A) during a predetermined time interval after the interruption of each telephone signal, said time interval being arranged to correspond to, or exceed, the time interval existing between successively following telephone signals.

8. Device according to any of claims 4 - 7, characterised in that the output signal from the signal status indicating unit (A) is arranged to be transmitted as a continously maintained signal during the period of time while telephone signals and/or lifted telephone receiver is being indicated, and that the shunting resistor (G) is maintained connected during the time period such a signal is maintained.

9. Device according to any of claims 4 - 7, characterised in that the output signal from the signal status indicating unit (A) is arranged to be transmitted as two separated and independent signals, having independent signal characteristics from each other, a first signal being transmitted when the surveiliance results in signal indication, said signal being arranged to result in connection of the shunting resistor (G), while a second signal, having different signal characteristics from the first signal, is being transmitted when signal indication no longer exists, reception of said second signal being arranged to result in disconnection of the shunting resistor (G).

10.  Device according to any of claims 4 - 9, characterised in that the shunting resistor (G) is arranged as an integrated part of the audio circuit in the audio source to be placed under surveillance, preferably also the relay (F) or similar member arranged to facilitate connection/disconnection of the shunting resistor (G), and that connecting means for the connecting/disconnecting member (F), and when necessary also connecting means for voltage supply, are arranged at said audio source.